Europäisches Patentamt

European Patent Office

Office européen des brevets

(19)

(11) Publication number: **0 119 977**
**A1**

(12) # EUROPEAN PATENT APPLICATION

(21) Application number: **84850078.1**

(22) Date of filing: **09.03.84**

(51) Int. Cl.³: **G 02 B 5/172, C 03 B 37/075**

(30) Priority: **22.03.83 SE 8301560**

(43) Date of publication of application: **26.09.84**
**Bulletin 84/39**

(84) Designated Contracting States: **CH DE FR GB IT LI NL**

(71) Applicant: **TELEFONAKTIEBOLAGET L M ERICSSON,**
**S-126 25 Stockholm (SE)**

(72) Inventor: **Lubos, Vácha, Rubingangen 53,**
**S-135 49 Tyresö (SE)**

(74) Representative: **Wennerholm, Kristian et al,**
**TELEFONAKTIEBOLAGET L M ERICSSON,**
**S-126 25 Stockholm (SE)**

(54) **High-attenuation optical glass fiber.**

(57)    A fiber optical attenuation set consists of a glass fiber with a core of sodium-barium-borosilicate and a cladding of sodium borosilicate with an addition of aluminium oxide. For achieving desired attenuation/unit length of the fiber, both the core and the cladding contain a pigmenting oxide, e.g. uran trioxide $U_3O_8$. Furthermore, the cladding glass contains a substantially smaller addition of another pigmenting oxide, e.g. copper oxide CuO.

# HIGH-ATTENUATION OPTICAL GLASS FIBER

## TECHNICAL FIELD

The present invention relates to a high-attenuation optical glass fiber for use as a fiberoptic attenuation set in such as a feedback adapter.

## BACKGROUND ART

Within the field of fiber optic transmission there is, as with transmission by coaxial cables, the need of cheap attenuation sets having constant and reproducable attenuation within a given wavelength interval.

In general, this has been solved such that the user has utilized an optical attenuation set comprising glass plates coated with absorbing material in layers having different thicknesses. Due to its implementation, this type of attenuation set is very expensive.

## DISCLOSURE OF INVENTION

What is novel in the present invention is the utilization of glass fiber as an attenuation set in the system as well as in the transmitting glass fiber, attenuation in the fiber being increased with the aid of chemical additives during its manufacture, this fiber prepared thus being used as an attenuation element, which gives a comparatively cheap solution to the attenuation problem. This does indeed involve a further operation in manufacture, which would not be necessary if the same kind of glass fiber were used as attenuation element, but gives the advantage that fiber material can be saved, since considerably shorter lengths are required for achieving desired attenuation.

The object of the present invention is to provide an optical glass fiber with a particular chemical composition in the core glass and in the surrounding cladding glass for achieving a constant and reproducible attenuation over a given wavelength range. The invention is thereby characterized as will appear from the characterizing portion of claim 1.

BRIEF DESCRIPTION OF DRAWINGS

The invention will now be described in detail with reference to the appended drawing, whereon Figure 1 is a diagram giving the intervals within which additive substances are selected for core glass and cladding glass in the fiber in accordance with the invention, Figure 2 illustrates the attenuation in the inventive fiber as a function of the wavelength for different additive substances, Figure 3 is a diagram of the attenuation/unit length in the fiber as function of the content of additive substance.

BEST MODES FOR CARRYING OUT THE INVENTION

As is known, an optical fiber comprises a core and a surrounding cladding, both with a given glass composition, e.g. sodium-barium-borosilicate in the core glass and sodium borosilicate in the cladding glass, possibly with a minor addition of Al oxide. In the manufacture of an attenuating optical fiber in accordance with the invention, the same fiber type is used initially as is used in the transmission system, and with the above-mentioned glass composition. This is manufactured according to the so-called double crucible method and is of the gradient fiber type with a diameter of 50-125 $\mu$m. Pigmenting oxides are added to the core glass melt for increasing attenuation to the desired level. The composition of the cladding glass is modified in a similar way, but the pigmenting oxide content is increased somewhat, so that attenuation (reckoned in dB/unit length) is at a higher level. The pigmenting oxides are added during mixing the raw materials for the glass melt, which is then formed into glass bars, as described in Ericsson Review, No. 3, 1980, pages 12-13, for example. One fiber is then drawn from both glass melts in a manner described in the above-mentioned Ericsson Review.

Suitable pigmenting oxides are ferric trioxide $Fe_3O_4$, cerium oxide $CeO_2$ or uran trioxide $U_3O_8$ for the core glass or a combination of uran trioxide $U_3O_8$ plus copper oxide $CuO$ for the cladding glass. Best results are obtained with a certain percentage by weight of uran trioxide $U_3O_8$ in the core glass.

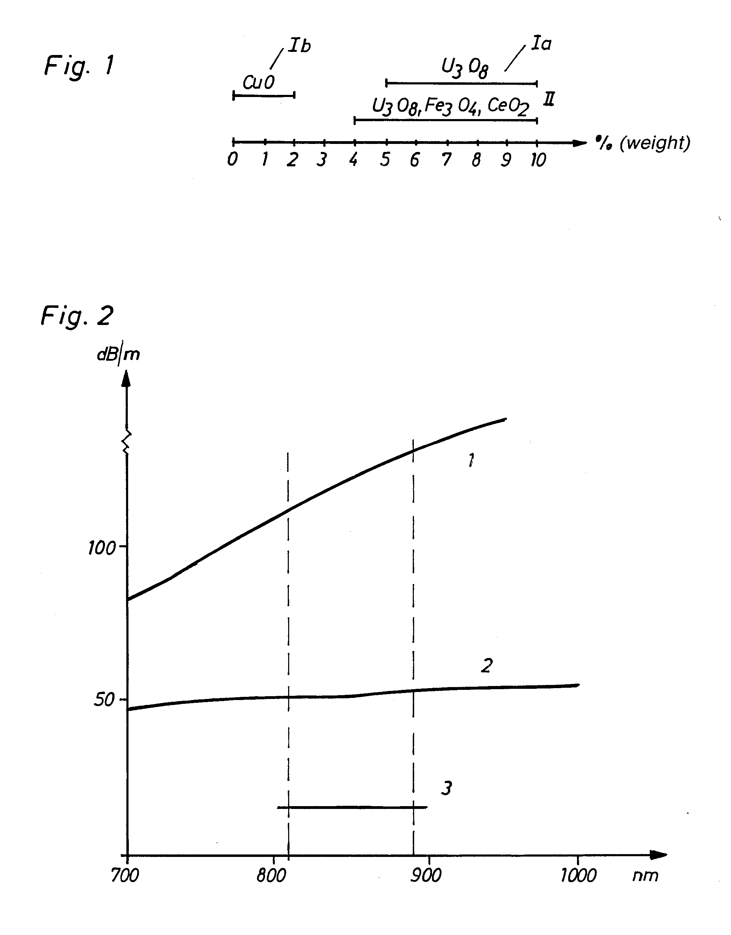

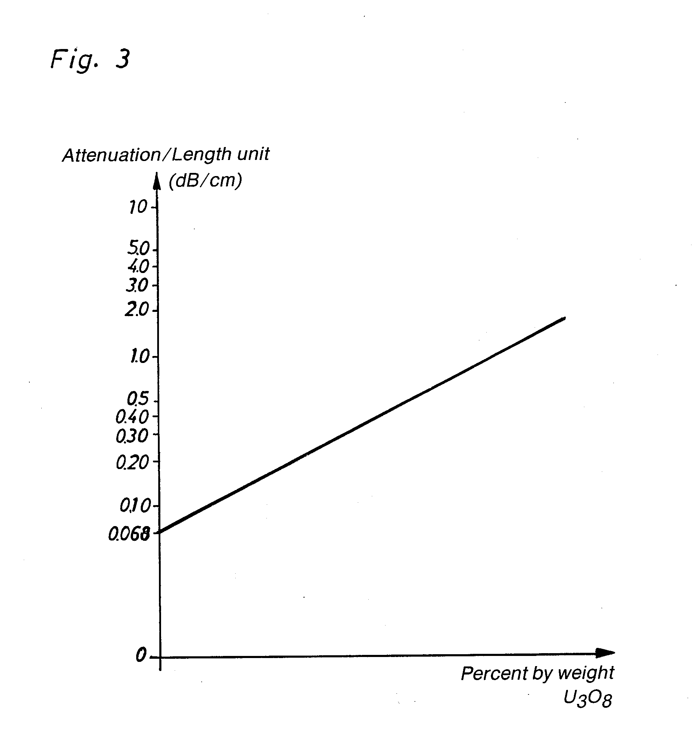

Figure 1 schematically illustrates the weight percentage intervals for the pigmenting oxides which are used, dependent on what attenuation/unit length in the fiber is desired. Figure 3 illustrates more closely the attenuation/unit length for a given wavelength. From Figure 1 will be seen the weight percentage intervals 1a and 1b for both chemical components added to the cladding glass composition, and the interval II for the chemical component added to the core glass composition. Both results are obtained with a combination of uran trioxide $U_3O_8$ and copper oxide CuO for the cladding glass and uran trioxide $U_3O_8$ in the core glass. Generally, attenuation/unit length shall be higher in the cladding glass than in the core glass.

Suitable weight percentage values for an attenuating optical fiber with a compsition as mentioned in the introduction are:

6 % of $U_3O_8$ in the core glass

7,5 % of $U_3O_8$ and 0,01 % CuO in the cladding glass.

This gives a constant attenuation of 15 dB/m in the wavelength range between 800-900 nm.

Figure 2 is a diagram over the attenuation per unit length as a function of the wavelength for the case where there has been an addition of 6,5 percent by weight of $U_3O_8$ in the core glass (graph 1), and an addition of 7,5 percent by weight of $U_3O_8$ plus 0,01 percent by weight CuO in the cladding glass (graph 2). The resulting attenuation in the fiber will be seen from graph 3, i.e. a substantially constant attenuation over the wavelength range 800-900nm.

Figure 3 is a diagram of the attenuation/unit length as a function of the additive $U_3O_8$ in percent by weight. This is applicable to the core glass, while it is a condition that the pigmenting oxide composition in the cladding glass is 7,5 % $U_3O_8$ plus 0,01 % CuO. It will be seen from the diagram that the relationship is substantially linear.

0119977

## CLAIMS

1    Optical glass fiber comprising a core with a glass composition of sodium-barium borosilicate, and cladding surrounding the core having a glass composition of sodium borosilicate with an addition of aluminium oxides for use as a wavelength-independent attenuating set in a glass fiber transmission, characterized in that the core glass as well as the cladding glass contain a first pigmenting oxide additive having a percentage by weight, depending on the desired attenuation per unit length of the fiber, not exceeding 10 % by weight, and that the cladding glass furthermore contains an additive of a further pigmenting oxide to a substantially less percentage by weight than the first pigmenting oxide.

2    Optical glass fiber as claimed in claim 1, characterized in that said first pigmenting oxide comprises one of the substances uran trioxide $U_3O_8$, ferric trioxide $Fe_3O_4$ or cerium dioxide $CeO_2$ as an additive in the core glass, and in the cladding glass of uran trioxide $U_3O_8$, with copper oxide CuO as a further pigmenting oxide.

3    Optical glass fiber as claimed in claim 2, characterized in that as a first pigmenting oxide in the core glass there is selected uran trioxide $U_3O_8$ to a given percentage by weight, depending on the desired attenuation/unit length, and that there is selected for the cladding glass 7,5 % by weight uran trioxide $U_3O_8$ as well as 0,01 percent by weight of copper oxide CuO as a further pigmenting oxide.

**Fig. 1**

**Fig. 2**

*Fig. 3*

European Patent
Office

**EUROPEAN SEARCH REPORT**

0149977

Application number

EP 84 85 0078

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-1-3 102 639 (PILKINGTON BROTHERS LTD)<br><br>* Page 14, line 27- page 15, line 20* | 1, 2 | G 02 B 5/172<br>C 03 B 37/075 |

| | | | TECHNICAL FIELDS SEARCHED (Int. Cl. ³) |
|---|---|---|---|
| | | | G 02 B<br>C 03 B<br>C 03 C |

The present search report has been drawn up for all claims

| Place of search | Date of completion of the search | Examiner |
|---|---|---|
| STOCKHOLM | 29-05-1984 | MAGNUSSON G. |